# EUROPÄISCHE PATENTANMELDUNG

(11) **EP 3 771 522 A1**
(43) Veröffentlichungstag der Anmeldung: **03.02.2021**
(21) Anmeldenummer: 19188992.2
(22) Anmeldetag: 30.07.2019
(51) Int. Cl.: B25J 9/16

(54) **VERFAHREN UND MANIPULATIONSSYSTEM ZUR MANIPULATION EINES OBJEKTS DURCH EINEN ROBOTER MITTELS VEKTORFELDER**

(71) Anmelder: Siemens Aktiengesellschaft, 80333 München (DE)
(72) Erfinder: Schmitt, Philipp Sebastian, 81735 München (DE); Wirnshofer, Florian, 80335 München (DE)

(57) **Zusammenfassung**

Ein Verfahren bei dem eine Bewegung bzw. eine Manipulation eines Objekts (OB) durch einen Roboter (R) unter Einhaltung von Nebenbedingungen (NB), insbesondere Hindernissen (H1,H2,H3), von einem Startzustand (MS) zum Manipulationsziel (MT) generiert wird,

wobei die Manipulation in unterschiedliche Manipulationsmodi (M1,M2,M3) bzw. Teilstücke unterteilt ist, welche verschiedene Nebenbedingungen (NB) umfassen,

wobei mehrere manipulationsmodusspezifische Regler (R1,R2,R3,R4) zur Regelung von Teilmanipulationen in den unterschiedlichen Manipulationsmodi (M1,M2,M3) bzw. Teilstücken zufallsbasiert generiert werden (RGEN) und eine optimierte Sequenz dieser Regler (R1,R2,R3,R4), insbesondere eine Abfolge dieser Regler, zufallsbasiert generiert wird (SGEN),

wobei insbesondere die Regler (R1,R2,R3,R4) ein Vektorfeld bzw. ein Richtungsfeld spezifizieren,

wobei ein Simulationsmodul (SIM) die Manipulation bzw. die Bewegung für jede der Reglersequenz (RS) simuliert und einen ein Erreichen des Manipulationsziels (MT) quantifizierenden Aufwandswert (AW) bzw. einen Kostenwert, ermittelt,

und wobei die Reglersequenz (RS) und der Aufwandswert (AW) einem Maschinenlernmodul (NN) als Trainingsdaten zugeführt werden, um um einen aufwandoptimierten Regler (OR) anzugeben, der z.B. den Aufwandswert (AW) optimiert bzw. minimiert.

Mittels eines aufwandsoptimierenden Reglers (OR) werden anhand des sensorisch erfassten aktuellen Manipulationszustandes (AMZ) Steuerdaten (CD) zum Ansteuern des Roboters (R) generiert.

## Beschreibung

In vielen Bereichen, insbesondere bei der Herstellung von Produkten, in der Logistik sowie bei vielen Dienstleistungen werden zunehmend Roboter, insbesondere Industrieroboter, Serviceroboter, Transportroboter, Portalroboter oder andere automatisierte Manipulationssysteme zur Manipulation von Objekten eingesetzt. Typische Manipulationsaufgaben umfassen hierbei insbesondere ein Greifen, Bearbeiten und/oder Handhaben von Objekten. Beispielsweise kann ein Roboter zunächst eine Kamera über ein zu manipulierendes Objekt verfahren, mit Hilfe der Kamera das Objekt lokalisieren, einen Greifer in die Nähe des Objekts verfahren, das Objekt ergreifen, das gegriffene Objekt in eine Ablageposition verfahren und das Objekt wieder loslassen.

Bei derartigen Manipulationen sind häufig eine Vielzahl von Nebenbedingungen einzuhalten, die insbesondere Bewegungsbeschränkungen des Roboters, eine Fixierung von Objekten, Kraftbegrenzungen, Abstandsbegrenzungen oder eine Vermeidung von Kollisionen mit anderen Robotern oder Hindernissen betreffen können.

Eine Planung solcher Manipulationen erfolgt bisher in vielen Fällen manuell. Eine manuelle Planung ist aber in der Regel zeitaufwendig. Zudem kann häufig nur eine begrenzte Anzahl von Verhaltensweisen für den Roboter programmiert werden.

Darüber hinaus sind rechnergestützte Planer verfügbar, die eine automatisierte Planung von Robotermanipulationen erlauben. Im Rahmen einer solchen Planung werden häufig ausgehend von einer Aufgabenbeschreibung für die Manipulation und den hierbei einzuhaltenden Nebenbedingungen eine oder mehrere Trajektorien für die Manipulation ermittelt, die den Nebenbedingungen genügen. Der Roboter kann dann die ermittelten Trajektorien ausführen. In vielen Fällen sind derartige Trajektorien jedoch nicht für eine reaktive, das heißt geregelte Ausführung geeignet. Damit kann der Roboter bei Abweichungen der tatsächlichen Manipulation von der ermittelten Trajektorie oft nicht in geregelter Weise reagieren.

Aus dem Dokument "Modeling and Planning Manipulation in Dynamic Environments" von Philipp S. Schmitt et al., in Int. Conf. on Robotics and Automation, IEEE, 2019, Vorabdruck online unter http://ais.informatik.unifreiburg.de/publications/papers/schmitt19icra.pdf (abgerufen am 10. Juli 2019) ist ein Verfahren bekannt, durch das sog. constraintbasierte Regler zur geregelten Ausführung von Manipulationen unter vorgegebenen Nebenbedingungen generiert werden können. Viele der so generierten Regler können jedoch an ungünstig geformten Hindernissen gewissermaßen festlaufen. Auf das vorstehende Dokument wird im Folgenden mit [1] Bezug genommen.

Es ist Aufgabe der vorliegenden Erfindung, ein Verfahren und ein Manipulationssystem zur Manipulation eines Objekts durch einen Roboter zu schaffen, die eine geregelte und flexible Umgehung von Hindernissen erlauben.

Gelöst wird diese Aufgabe durch ein Verfahren mit den Merkmalen des Patentanspruchs 1, durch ein Manipulationssystem mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zur Manipulation eines Objekts durch einen Roboter, wobei die Manipulation auf ein Manipulationsziel gerichtet ist und unterschiedliche Manipulationsmodi umfasst, werden mehrere manipulationsmodusspezifische Regler jeweils zum Regeln einer auf einen Manipulationsmodus eingeschränkten Teilmanipulation generiert. Der Roboter kann hierbei insbesondere ein Industrieroboter, ein Serviceroboter, ein Transportroboter, ein Portalroboter, ein sogenannter Gantry oder ein anderes Manipulationssystem zur Manipulation von Objekten sein. Erfindungsgemäß wird für eine Vielzahl von Manipulationszuständen und eine Vielzahl der generierten Regler jeweils eine vom jeweiligen Manipulationszustand ausgehende und durch den jeweiligen generierten Regler geregelte Teilmanipulation simuliert, wobei ein ein Erreichen des Manipulationsziels quantifizierender Aufwandswert ermittelt wird. Anhand der Vielzahl der Manipulationszustände, der Vielzahl der generierten Regler sowie der Aufwandswerte wird ein Maschinenlernmodul darauf trainiert, anhand eines Manipulationszustandes einen der generierten Regler zu ermitteln, der einen Aufwandswert optimiert. Unter einem Optimieren sei dabei auch ein Annähern an ein Optimum verstanden. Weiterhin wird ein aktueller Manipulationszustand sensorisch erfasst, anhand dessen durch das trainierte Maschinenlernmodul ein aufwandsoptimierender Regler ermittelt wird. Mittels des aufwandsoptimierenden Reglers werden anhand des aktuellen Manipulationszustandes Steuerdaten zum Ansteuern des Roboters generiert.

Zum Ausführen des erfindungsgemäßen Verfahrens sind ein Manipulationssystem, ein Computerprogrammprodukt sowie ein computerlesbares, vorzugsweise nichtflüchtiges Speichermedium vorgesehen.

Das erfindungsgemäße Verfahren, das erfindungsgemäße Manipulationssystem sowie das erfindungsgemäße Computerprogrammprodukt können beispielsweise mittels eines oder mehrerer Prozessoren, eines oder mehrerer Computer, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass es eine reaktive und robuste Steuerung komplexer Manipulationen erlaubt. Aufgrund der Berücksichtigung einer Vielzahl von Manipulationszuständen und Regelungsvarianten kann eine Umgehung komplexer Hindernisse in vielen Fällen erfolgreich trainiert werden. Insofern eine Anwendung eines trainierten Maschinenlernmoduls in der Regel einen erheblich geringeren Rechenaufwand erfordert als dessen Training kann die Ermittlung eines aufwandsoptimierenden Reglers zu einem aktuellen Manipulationszustand häufig in Echtzeit erfolgen.

Vorteilhafte Ausführungsformen und Weiterbildungen der Erfindung sind in den abhängigen Ansprüchen angegeben.

Nach einer vorteilhaften Ausführungsform der Erfindung kann ein Zustandsraum der Manipulation eine Konfiguration des Roboters, einen Roboterzustand, einen Objektzustand, einen Kontaktzustand zwischen Roboter und Objekt, einen Zeitparameter, eine Zeitableitung und/oder einen Zustand anderer an der Manipulation beteiligter Komponenten umfassen. Insbesondere kann ein Konfigurationsraum des Roboters ein Unterraum des Zustandsraums sein.

Weiterhin können unterschiedliche, bei der Manipulation einzuhaltende Nebenbedingungen erfasst werden. Aus einer durch eine jeweilige Nebenbedingung bedingten Einschränkung des Zustandsraums kann dann ein jeweiliger Manipulationsmodus abgeleitet werden. Insbesondere kann eine solche Einschränkung des Zustandsraums durch den betreffenden Manipulationsmodus spezifiziert, definiert und/oder dargestellt werden. Die Einschränkungen des Zustandsraums können jeweils eine Hyperfläche im Zustandsraum oder eine durch eine Hyperfläche begrenzte Teilmenge des Zustandsraums bilden. Eine jeweilige Nebenbedingung kann insbesondere auch mehrdimensional sein, das heißt mehrere Manipulationsparameter betreffen. Regler, die für nebenbedingungsbasierte Manipulationsmodi generiert werden, werden häufig auch als constraintbasierte Regler oder constraint-based controller bezeichnet. Insofern derartige constraintbasierte Regler jeweils eine auf einen Manipulationsmodus eingeschränkte und damit eine jeweilige Nebenbedingung zumindest näherungsweise einhaltende Teilmanipulation regeln, müssen diese Nebenbedingungen bei einer nachfolgenden manipulationsmodusübgreifenden Optimierung nicht mehr explizit berücksichtigt werden. Hierdurch kann ein Optimierungsaufwand in vielen Fällen beträchtlich verringert werden.

Eine jeweilige Nebenbedingung kann insbesondere eine Fixierung des Objekts, eine Bewegungsbegrenzung einer Achse des Roboters, eine Kollisionsvermeidung, eine Geschwindigkeitsbegrenzung, eine Beschleunigungsbegrenzung, eine Kraftbegrenzung und/oder eine Abstandsbegrenzung betreffen. Insbesondere kann eine jeweilige Nebenbedingung durch eine Kinetik oder Dynamik von Roboterbewegungen und/oder von Greifvorgängen bedingt sein.

Weiterhin kann vorgesehen sein, dass ein manipulationsmodusspezifischer Regler zum Regeln einer auf einen ersten Manipulationsmodus eingeschränkten, zu einem zweiten Manipulationsmodus führenden Teilmanipulation generiert wird. Derartige Regler werden häufig auch als mode-switching-Regler bezeichnet und ermöglichen einen Wechsel zwischen verschiedenen Manipulationsmodi.

Darüber hinaus kann vorgesehen sein, dass innerhalb eines Manipulationsmodus ein Teilmanipulationsziel selektiert wird, und dass ein manipulationsmodusspezifischer Regler zum Regeln einer auf diesen Manipulationsmodus eingeschränkten, zum Teilmanipulationsziel führenden Teilmanipulation generiert wird. Vorzugsweise kann das Teilmanipulationsziel zufallsbasiert selektiert werden. Ein solcher Regler wird häufig auch als random-target-Regler bezeichnet. Mittels derartiger random-target-Regler können in vielen Fällen Wege zur geregelten Umgehung von Hindernissen auf effektive Weise gefunden werden.

Nach einer vorteilhaften Ausführungsform der Erfindung können die Vielzahl der Manipulationszustände zufallsbasiert generiert werden und/oder die Vielzahl der generierten Regler zufallsbasiert ausgewählt werden. Auch dies kann effektiv dazu beitragen, Wege zur geregelten Umgehung von Hindernissen zu finden.

Weiterhin kann der Aufwandswert abhängig von einer simulierten Zeitdauer und/oder einer Anzahl von simulierten Steuerschritten bis zum Erreichen des Manipulationsziels ermittelt werden.

Nach einer weiteren vorteilhaften Ausführungsform der Erfindung kann für eine Vielzahl von Abfolgen von generierten Reglern jeweils eine durch die jeweilige Abfolge geregelte Manipulation simuliert werden, wobei ein ein Erreichen des Manipulationsziels quantifizierender Aufwandswert ermittelt wird. Das Training des Maschinenlernmoduls kann dann anhand dieser ermittelten Aufwandswerte erfolgen. Für die Reglerabfolge kann insbesondere simulativ geprüft werden, ob sie zum Manipulationsziel führt oder nicht.

Ein Ausführungsbeispiel der Erfindung wird nachfolgend anhand der Zeichnung näher erläutert, dabei veranschaulichen jeweils in schematischer Darstellung:
- Figur 1: ein Manipulationssystem beim Ausführen einer Manipulation an einem Objekt,
- Figur 2: durch Nebenbedingungen eingeschränkte Bereiche eines Zustandsraums zu verschiedenen Manipulationsmodi,
- Figur 3: constraintbasierte Regler für verschiedene Manipulationsmodi,
- Figur 4: eine Steuerung eines erfindungsgemäßen Manipulationssystems in einer Trainingsphase und
- Figur 5: die trainierte Steuerung beim Steuern einer Manipulation.

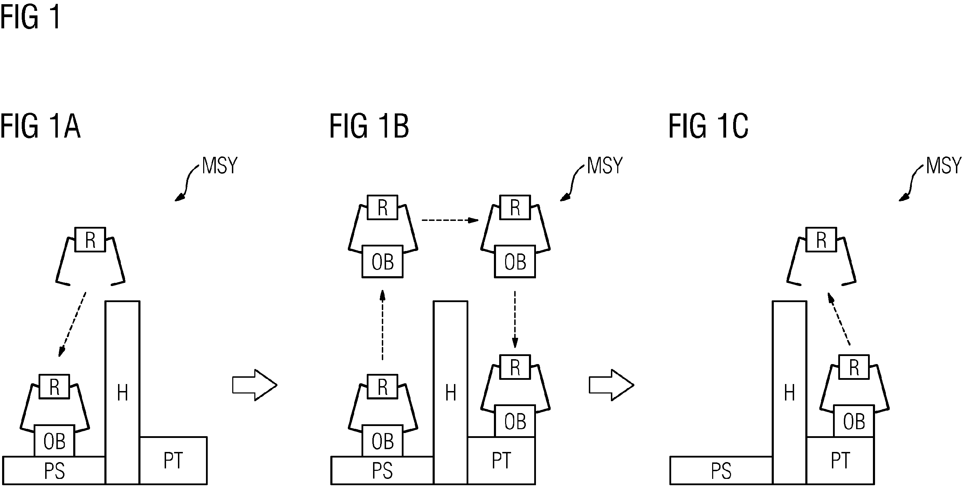

Figur 1 zeigt in den Teilfiguren 1A, 1B und 1C jeweils ein Manipulationssystem MSY mit einem Roboter R beim Ausführen einer Manipulation an einem Objekt OB in schematischer Darstellung. Die Teilfiguren 1A, 1B und 1C veranschaulichen hierbei verschiedene Manipulationsphasen der auszuführenden Manipulation. Der Roboter R kann ein Industrieroboter, Serviceroboter, Transportroboter, Portalroboter, ein sogenannter Gantry oder ein anderes Manipulationssystem zur Manipulation von Objekten sein. Als Objekt OB kann ein Werkzeug, ein Werkstück oder ein anderer Gegenstand manipuliert werden.

Das Objekt OB befindet sich zu Beginn der Manipulation an einer Startposition PS und soll durch den Roboter R gegriffen und über ein Hindernis H an einer Zielposition PT als Ziel der Manipulation abgelegt werden.

Die Teilfigur 1A veranschaulicht den Beginn der Manipulation, bei der der Roboter R oder ein Roboterarm oder ein Greifer der Roboters R sich zum Objekt OB bewegt und das an der Startposition PS befindliche Objekt OB greift. In einer nachfolgenden Manipulationsphase, die in Teilfigur 1B veranschaulicht wird, bewegt sich der Roboter R mit dem gegriffenen Objekt OB über das Hindernis H hinweg und legt das Objekt OB an der Zielposition PT ab. In einer weiteren Manipulationsphase, die in Teilfigur 1C veranschaulicht wird, lässt der Roboter R das an der Zielposition befindliche Objekt OB los und entfernt sich vom Objekt OB.

Wie in den Teilfiguren 1A, 1B und 1C veranschaulicht wird, sind in verschiedenen Manipulationsphasen unterschiedliche Nebenbedingungen durch den Roboter R einzuhalten. So muss der Roboter R mit gegriffenem Objekt OB einen größeren Abstand zum Hindernis H einhalten als ohne das gegriffene Objekt OB. Mit anderen Worten: Ein kollisionsfreier Bereich in einem Zustandsraum der Manipulation verändert sich abhängig davon, ob der Roboter R das Objekt OB gegriffen hat oder nicht.

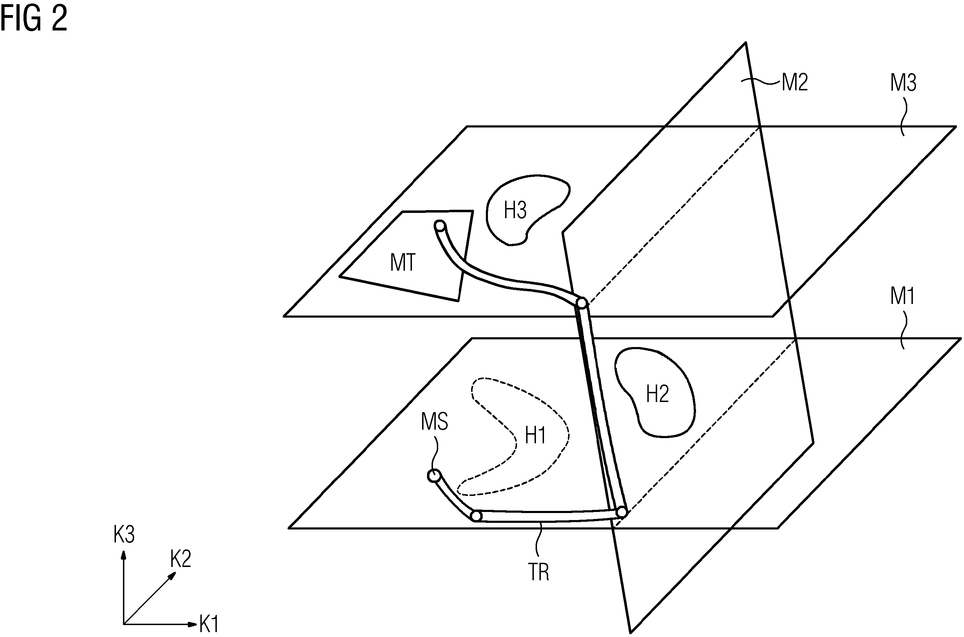

Derartige durch Nebenbedingungen eingeschränkte Bereiche eines Zustandsraums der auszuführenden Manipulation werden in Figur 2 veranschaulicht. Die durch unterschiedliche Nebenbedingungen eingeschränkten Bereiche des Zustandsraums definieren verschiedene Manipulationsmodi M1, M2 und M3. Der Zustandsraum ist hierbei ein Zustandsraum der an der Manipulation beteiligten Komponenten. Zu diesen Komponenten können insbesondere der Roboter R, ein Roboterarm oder ein Greifer des Roboters R, ein oder mehrere zu manipulierende Objekte OB oder andere Komponenten des Manipulationssystems MSY gehören.

Der Zustandsraum umfasst eine Vielzahl von Manipulationszuständen, insbesondere Konfigurationen sowie Zustände des Roboters R, Objektzustände, Kontaktzustände zwischen Roboter R und Objekt OB, Zeitparameter, Zeitableitungen sowie andere Zustände des Manipulationssystems MSY. Die Manipulationszustände des Zustandsraums können einerseits diskrete Zustände umfassen, die z.B. angeben, ob ein Objekt gegriffen ist oder nicht, oder ob ein Ventil geöffnet oder geschlossen ist. Andererseits können die Manipulationszustände des Zustandsraums kontinuierliche Zustände wie beispielsweise Positionierungen, Orientierungen, Geschwindigkeiten oder auftretende Kräfte umfassen. Dementsprechend können die Manipulationszustände des Zustandsraums durch Bewegungskoordinaten, Positionskoordinaten, Einstellgrößen, Messdaten oder andere Manipulationsparameter dargestellt werden. Insbesondere kann ein jeweiliger Manipulationszustand mit einer Vielzahl von Parametern als Zustandsvektor in einem hochdimensionalen Zustandsvektorraum dargestellt werden.

In Figur 2 sind beispielhaft Koordinatenachsen K1, K2 und K3 des Zustandsraums angedeutet. Aus Übersichtlichkeitsgründen sind hierbei nur drei Koordinatenachsen einer möglichen Vielzahl von Koordinatenachsen dargestellt. Eine jeweilige Koordinatenachse K1, K2 bzw. K3 kann dabei auch stellvertretend mehrere Dimensionen des Zustandsraums repräsentieren. Im vorliegenden Ausführungsbeispiel werden entlang der Koordinatenachsen K1 und K2 eine Position des Roboters R sowie dessen Greifzustand parametrisiert, während entlang der Koordinatenachse K3 eine Position des Objekts OB parametrisiert wird.

In Bezug auf den Zustandsraum besteht die auszuführende Manipulationsaufgabe darin, die an der Manipulation beteiligten Komponenten unter Einhaltung von vorgegebenen Nebenbedingungen von einem Startzustand MS der Manipulation zu einem Manipulationsziel MT zu steuern. Das Manipulationsziel MT kann ein durch die Manipulation zu erreichender Zielzustand oder ein Bereich von Zielzuständen im Zustandsraum sein. In Figur 2 ist als Manipulationsziel MT ein Zielbereich angedeutet.

Eine derartige Manipulationsaufgabe wird häufig auch als Constrained-Motion-Problem bezeichnet. Wie schon aus dem Begriff hervorgeht, ist ein wesentlicher Aspekt derartiger Manipulationsaufgaben die Einhaltung von Nebenbedingungen, die - wie im Zusammenhang mit Figur 1 bereits angedeutet - je nach Manipulationsphase wechseln können. Die Nebenbedingungen sind insbesondere durch Kinetik und Dynamik der Roboterbewegungen, der Objektbewegungen und des Greifvorgangs bestimmt. Weiterhin werden durch das Erfordernis der Kollisionsvermeidung, z.B. zwischen Roboter R, Objekt OB und Hindernis H sowie zwischen anderen Teilen des Manipulationssystems MSY weitere Nebenbedingungen festgelegt. Die Nebenbedingungen können dabei insbesondere zeitabhängig sein, z.B. im Fall von beweglichen Hindernissen. Darüber hinaus kann eine jeweilige Nebenbedingung auch mehrdimensional sein, das heißt mehrere einzelne Manipulationsparameter betreffen.

Durch eine Nebenbedingung wird jeweils ein eingeschränkter Bereich des Zustandsraums definiert, in dem die jeweilige Nebenbedingung zumindest näherungsweise erfüllt ist. Als Nebenbedingungen können insbesondere Gleichheits-Nebenbedingungen und Ungleichheits-Nebenbedingungen vorgegeben sein. Ein Beispiel einer Gleichheits-Nebenbedingung ist die stabile Fixierung des Objekts OB. Das Objekt OB muss hierbei stabil auf einer Ablagefläche liegen oder stabil vom Roboter R gegriffen sein. Eine durch eine Gleichheits-Nebenbedingung bedingte Einschränkung des Zustandsraums bildet im Allgemeinen eine Hyperfläche im einbettenden Zustandsraum. Beispiele für Ungleichheits-Nebenbedingungen sind Bewegungsbegrenzungen von Achsen des Roboters R, Geschwindigkeitsbegrenzungen, Abstandsbegrenzungen oder durch das Erfordernis der Kollisionsvermeidung bedingte Nebenbedingungen. Eine durch eine Ungleichheits-Nebenbedingung bedingte Einschränkung des Zustandsraums bildet im Allgemeinen eine durch eine Hyperfläche begrenzte Teilmenge des Zustandsraums.

Insofern je nach Manipulationsphase gegebenenfalls verschiedene Nebenbedingungen einzuhalten sind, zerfällt die auszuführende Manipulation in verschiedene Manipulationsmodi, die jeweils durch die betreffende Nebenbedingung bzw. durch den betreffenden eingeschränkten Bereich des Zustandsraums definiert oder spezifiziert werden. Ein Manipulationsmodus kann insbesondere einen Kontaktzustand zwischen Objekt OB und Roboter R darstellen, definieren oder spezifizieren. Ein derartiger Kontaktzustand kann beispielsweise angeben, ob ein Objekt gegriffen ist oder nicht.

Für das vorliegende Ausführungsbeispiel sind in Figur 2 aus Übersichtlichkeitsgründen nur drei Manipulationsmodi M1, M2 und M3 explizit dargestellt. Die Manipulationsmodi M1, M2 und M3 entsprechen hier Hyperflächen im Zustandsraum oder durch Hyperflächen begrenzten Teilmengen im Zustandsraum. Zu Beginn der Manipulation befinden sich die an der Manipulation beteiligten Komponenten im zum Manipulationsmodus M1 gehörigen Startzustand MS, in dem das Objekt OB an der Startposition PS platziert ist und sich nicht bewegt. In diesem Manipulationsmodus M1 können sich der Roboter R und sein Greiferzustand unabhängig vom Objekt OB in Richtung der Koordinatenachsen K1 und K2 bewegen.

Im Manipulationsmodus M2 ist das Objekt OB vom Roboter R gegriffen, das heißt der Greifer des Roboters R befindet sich an der Position des Objekts OB und der Greifer ist um das Objekt OB geschlossen. Der Greifer kann sich zusammen mit dem Objekt OB in Richtung der Koordinatenachsen K2 und K3 bewegen. Ein Übergang zwischen einem Manipulationszustand mit einem an der Startposition PS befindlichen Objekt OB und einem Manipulationszustand mit einem vom Roboter R gegriffenen Objekt OB kann nur in der Schnittmenge der Manipulationsmodi M1 und M2 erfolgen.

Im Manipulationsmodus M3 ist das Objekt OB an der Zielposition PT platziert und der Roboter R und sein Greiferzustand können sich wieder unabhängig vom Objekt OB in Richtung der Koordinatenachsen K1 und K2 bewegen. Ein Übergang zwischen einem Manipulationszustand mit gegriffenem Objekt OB und einem Manipulationszustand mit einem an der Zielposition PT platzierten Objekt OB kann nur in der Schnittmenge der Manipulationsmodi M2 und M3 erfolgen.

Die Manipulationsmodi M1, M2 und M3 werden im vorliegenden Ausführungsbeispiel durch vorgegebene Ungleichheits-Nebenbedingungen H1, H2 und H3 eingeschränkt, die im Folgenden als Hindernisse bezeichnet werden. Die Hindernisse H1, H2 und H3 repräsentieren durch die vorgegebenen Ungleichheits-Nebenbedingungen ausgeschlossene oder unzulässige Bereiche des Zustandsraums. So bildet das Hindernis H1 einen unzulässigen Bereich im Manipulationsmodus M1, das Hindernis H2 einen unzulässigen Bereich im Manipulationsmodus M2 und das Hindernis H3 einen unzulässigen Bereich im Manipulationsmodus M3. Das Hindernis H2 veranschaulicht hierbei einen unzulässigen Bereich bei gegriffenem Objekt OB, während die Hindernisse H1 und H3 unzulässige Bereiche ohne gegriffenes Objekt repräsentieren. Die unzulässigen Bereiche sind in verschiedenen Manipulationsmodi im Allgemeinen unterschiedlich. So muss - wie oben bereits erwähnt - der Roboter R mit gegriffenem Objekt OB einen größeren Abstand zum Hindernis H einhalten als ohne gegriffenes Objekt OB.

Bei einer Manipulation gibt ein jeweils aktueller Manipulationsmodus, hier M1, M2 oder M3, gewissermaßen an, welche Nebenbedingungen für das Manipulationssystem MSY aktuell gelten, maßgeblich sind oder aktiv sind.

Eine beispielhafte Trajektorie TR im Zustandsraum, die ausgehend vom Startzustand MS im Manipulationsmodus M1 um das Hindernis H1 herumführt und in den Manipulationsmodus M2 wechselt, von dort in den Manipulationsmodus M3 wechselt und schließlich im Manipulationsmodus M3 zum Manipulationsziel MT führt, ist in Figur 2 durch eine doppelte Linie angedeutet.

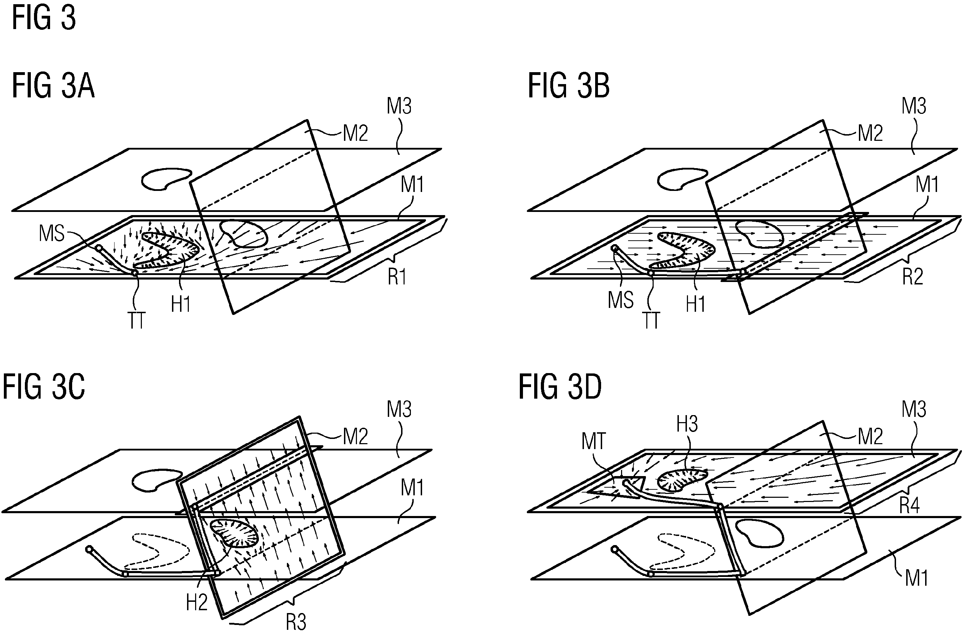

Figur 3 veranschaulicht in den Teilfiguren 3A, 3B, 3C und 3D verschiedene manipulationsmodusspezifische Regler R1, R2, R3 und R4 für verschiedene Manipulationsmodi, hier M1, M2 und M3. Insofern in den Figuren 3A bis 3D die gleichen oder korrespondierende Bezugszeichen verwendet werden, wie in den vorangegangenen Figuren, werden hierdurch die gleichen oder korrespondierende Entitäten bezeichnet, die vorzugsweise wie oben beschrieben implementiert oder realisiert sind.

Um einen Weg der an der Manipulation beteiligten Komponenten vom aktuellen Manipulationszustand zum Manipulationsziel MT zu finden, werden vorzugsweise zwei Arten von Bewegungen ausgeführt: Erste Bewegungen, die innerhalb eines Manipulationsmodus verbleiben und dort ein vorgegebenes Teilmanipulationsziel ansteuern sowie zweite Bewegungen, die innerhalb eines ersten Manipulationsmodus einen davon verschiedenen, zweiten Manipulationsmodus, also die Schnittmenge zwischen erstem und zweitem Manipulationsmodus, ansteuern, um einen Wechsel vom ersten in den zweiten Manipulationsmodus zu ermöglichen.

Die Bewegungen sollen jeweils geregelt ausgeführt werden, das heißt, bei einer Abweichung von einer Solltrajektorie oder bei Hindernissen soll eine die Abweichung ausgleichende bzw. vom Hindernis wegführende Bewegung veranlasst werden.

Zu diesem Zweck werden für einen jeweiligen Manipulationsmodus, hier M1, M2 bzw. M3, spezifische Regler, hier R1 bis R4 generiert, mit deren Hilfe für jeden Manipulationszustand Steuerdaten zur Regelung einer Manipulation im jeweiligen Manipulationsmodus erzeugt werden können. Die Steuerdaten veranlassen hierbei den Roboter R bzw. das Manipulationssystem MSY dazu, sich bei der Manipulation in geregelter Weise zu bewegen und dabei im betreffenden Manipulationsmodus zu verbleiben bzw. bei Abweichungen vom Manipulationsmodus geregelt in diesen zurückzusteuern. Gegebenenfalls kann ein im jeweiligen Manipulationsmodus befindliches Teilmanipulationsziel angesteuert werden.

Mittels der manipulationsmodusspezifischen Regler R1 bis R4 kann jeweils eine geschlossene Regelschleife im betreffenden Manipulationsmodus implementiert werden. Insofern derartige Regler spezifisch Bewegungen in durch Nebenbedingungen definierten Manipulationsmodi regeln, werden diese Regler häufig auch als constraintbasierte Regler oder constraint-based controller bezeichnet.

Die manipulationsmodusspezifischen Regler umfassen jeweils eine Datenstruktur, die ein Vektorfeld bzw. ein Richtungsfeld über dem Zustandsraum, insbesondere über dem auf den betreffenden Manipulationsmodus eingeschränkten Teil des Zustandsraums spezifiziert. Hierbei ist jedem Manipulationszustand im betreffenden Manipulationsmodus ein Vektor zugeordnet, der innerhalb dieses Manipulationsmodus eine Richtung vorgibt, in der die Manipulation zu steuern ist.

Zur geregelten Ausführung der ersten und zweiten Bewegungen werden entsprechend zwei Typen von manipulationsmodusspezifischen Reglern generiert und verwendet. So zum einen sogenannte Random-Target-Regler zum Ausführen bzw. zum Regeln der ersten Bewegungen, um ein zufallsbasiert ausgewähltes Teilmanipulationsziel innerhalb eines Manipulationsmodus anzusteuern. Mittels derartiger Random-Target-Regler mit zufällig gewählten Teilmanipulationszielen können Wege im Zustandsraum gefunden werden, die auch um komplex geformte Hindernisse, hier z.B. H1, H2 oder H3 herumführen, um zum Manipulationsziel MT zu gelangen. Zum anderen werden sogenannte Mode-Switching-Regler zum Regeln der zweiten Bewegungen generiert, um in einen anderen Manipulationsmodus zu wechseln.

Die manipulationsmodusspezifischen Regler R1 bis R4 des vorliegenden Ausführungsbeispiels werden in den Figuren 3A bis 3D jeweils durch ein Richtungsfeld auf dem jeweils zugehörigen Manipulationsmodus M1, M2 bzw. M3 veranschaulicht. Die Richtungsfelder sind hierbei jeweils durch eine Menge von Pfeilen angedeutet. Eine jeweils resultierende Trajektorie wird durch eine Doppellinie veranschaulicht.

Figur 3A veranschaulicht den für den Manipulationsmodus M1 spezifischen, constraintbasierten Regler R1. Letzterer regelt eine Teilmanipulation des Roboters R innerhalb des Manipulationsmodus M1, die insbesondere vom Startzustand MS zu einem zufallsbasierten Teilmanipulationsziel TT führt. Hierbei wird der Roboter R um das Hindernis H1 herumgesteuert. Der Regler R1 ist als Random-Target-Regler ausgestaltet.

Figur 3B veranschaulicht den ebenfalls für den Manipulationsmodus M1 spezifischen, constraintbasierten Regler R2. Der Regler R2 regelt ein Greifen des an der Startposition PS befindlichen Objekts OB durch den Roboter R und damit eine Bewegung innerhalb des Manipulationsmodus M1 zum Manipulationsmodus M2, in dem das Objekt OB durch den Roboter R gegriffen ist. Die Bewegung ist mithin auf die Schnittmenge des Manipulationsmodus M1 mit dem Manipulationsmodus M2 gerichtet. Der Regler R2 ist dementsprechend als Mode-Switching-Regler ausgestaltet.

Figur 3C veranschaulicht den für den Manipulationsmodus M2 spezifischen, constraintbasierten Regler R3. Letzterer regelt eine Teilmanipulation innerhalb des Manipulationsmodus M2 in Richtung zum Manipulationsmodus M3, in dem das Objekt OB sich in der Zielposition PT befindet. Die Bewegung erfolgt in Richtung der Schnittmenge zwischen dem Manipulationsmodus M2 und dem Manipulationsmodus M3. Der Regler R3 ist ebenfalls als Mode-Switching-Regler ausgestaltet.

Figur 3D veranschaulicht den für den Manipulationsmodus M3 spezifischen, constraintbasierten Regler R4. Der Regler R4 regelt innerhalb des Manipulationsmodus M3 ein Loslassen des an der Zielposition PT befindlichen Objekts OB sowie eine Bewegung des Roboters R zum Manipulationsziel MT.

Eine Generierung der vorstehend beschriebenen, constraintbasierten Reglertypen zu vorgegebenen Nebenbedingungen ist beispielsweise im Dokument [1] detailliert beschrieben.

Zum vorliegenden Ausführungsbeispiel sei angemerkt, dass der Regler R2 eine vom Startzustand MS ausgehende Bewegung am Hindernis H1 festlaufen ließe (siehe den Verlauf des Richtungsfeldes in Figur 3B), sodass der Manipulationsmodus M2 und letztlich das Manipulationsziel MT nicht erreicht würde. Dagegen kann ausgehend vom Teilmanipulationsziel TT der Manipulationsmodus M2 mittels des Reglers R2 durchaus erreicht werden. Das heißt, die Reglersequenz R1, R2 kann - anders als der Regler R2 allein - ausgehend vom Startzustand MS eine Bewegung in den Manipulationsmodus M2 steuern.

Nachfolgend wird beschrieben, auf welche Weise geeignete Regler bzw. Reglersequenzen gefunden werden können, deren Anwendung einen durchgehenden und optimierten Weg vom Startzustand MS zum Manipulationsziel MT regeln.

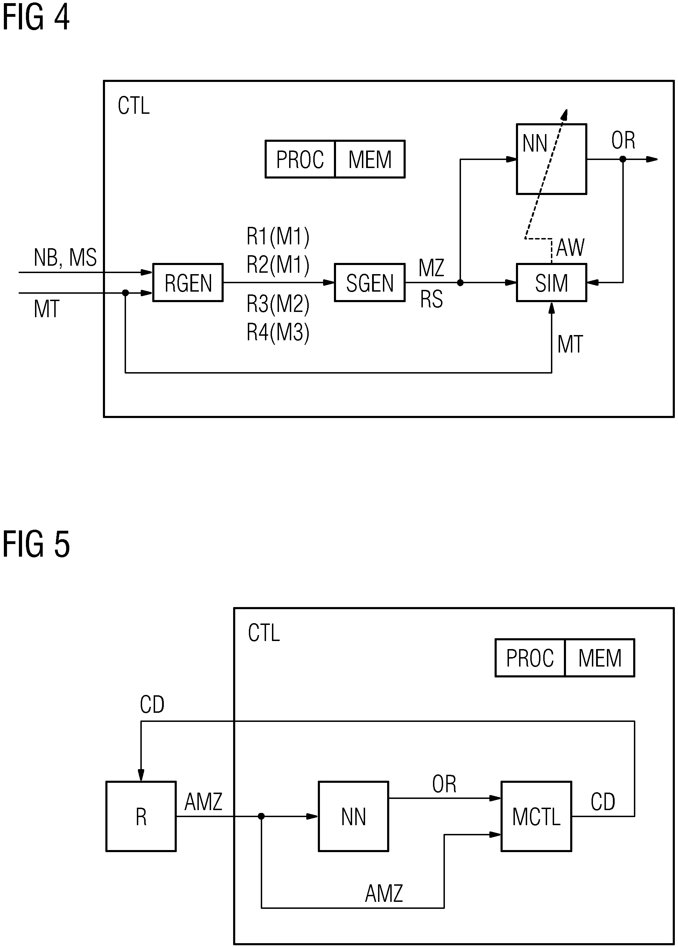

Figur 4 veranschaulicht eine Steuerung CTL eines erfindungsgemäßen Manipulationssystems in einer Trainingsphase. Insofern in Figur 4 die gleichen oder korrespondierende Bezugszeichen verwendet werden wie in den vorangegangenen Figuren, werden hierdurch die gleichen oder korrespondierende Entitäten bezeichnet, die vorzugsweise wie oben beschrieben implementiert oder realisiert sind.

Die Steuerung CTL steuert insbesondere den Roboter R und gegebenenfalls andere Teile des Manipulationssystems MSY. Sie verfügt über einen Prozessor PROC zum Ausführen von darauf ablaufenden Lern- und Steuerverfahren sowie über einen mit dem Prozessor PROC gekoppelten Speicher MEM zum Speichern von zu verarbeitenden Daten.

Erfindungsgemäß soll die Steuerung CTL anhand einer Aufgabenbeschreibung der auszuführenden Manipulation geeignete Regler generieren und darauf trainiert werden, eine optimierte Sequenz dieser Regler zu finden, die ausgehend von möglichen Startzuständen MS eine durchgehende Bewegung zum Manipulationsziel MT regeln. Die Aufgabenbeschreibung spezifiziert hierbei insbesondere bei der Manipulation einzuhaltende Nebenbedingungen NB, das anzusteuernde Manipulationsziel MT sowie mögliche Startzustände MS der Manipulation. Die Nebenbedingungen NB, die möglichen Startzustände MS sowie das Manipulationsziel MT werden zu einem Reglergenerator RGEN der Steuerung CTL übermittelt.

Durch die Nebenbedingungen NB werden für den Reglergenerator RGEN unterschiedliche Manipulationsmodi, im vorliegenden Ausführungsbeispiel M1, M2 und M3 definiert. Für die unterschiedlichen Manipulationsmodi M1, M2, und M3 wird durch den Reglergenerator RGEN eine Vielzahl von manipulationsmodusspezifischen Reglern, hier R1, R2, R3 und R4 generiert. Die Generierung derartiger Regler wird z.B. im Dokument [1] ausführlich beschrieben. Für ein reales Manipulationssystem wurden auf diese Weise 44 manipulationsmodusspezifische Regler generiert.

Wie oben bereits erwähnt, steuern die Regler R1, ..., R4 die Bewegung derart, dass die Nebenbedingungen NB zumindest näherungsweise eingehalten werden. Es bleibt zu ermitteln, welche Abfolge von Reglern von einem Startzustand MS oder vom aktuellen Manipulationszustand ausgehend tatsächlich zum Manipulationsziel MT führt. Zu diesem Zweck soll erfindungsgemäß eine Abbildung ermittelt werden, die zu einem jeweiligen Manipulationszustand einen Regler angibt, der im zugehörigen Manipulationsmodus eine möglichst effektive Annäherung an das Manipulationsziel MT regelt. Insbesondere soll dieser Regler zumindest ein Teilstück eines tatsächlich zum Manipulationsziel MT führenden Weges steuern.

Insofern das Einhalten der Nebenbedingungen NB, z.B. zur Kollisionsvermeidung oder zum Fixieren des Objekts OB bereits durch die generierten Regler R1, ..., R4 in reaktiver Weise gewährleistet wird, müssen diese Nebenbedingungen NB bei der nachfolgend beschriebenen, manipulationsmodusübergreifenden Optimierung von Reglersequenzen nicht mehr berücksichtigt werden. Hierdurch kann ein Optimierungsaufwand in vielen Fällen beträchtlich verringert werden.

Die oben erwähnte Abbildung von Manipulationszuständen auf constraintbasierte Regler wird erfindungsgemäß durch Trainieren eines Maschinenlernmoduls NN der Steuerung CTL erzeugt. Das Maschinenlernmodul NN umfasst vorzugsweise ein künstliches neuronales Netz, das ein Verfahren des bestärkenden Lernens, auch Reinforcement-Learning genannt, implementiert. Insbesondere kann das Maschinenlernmodul NN ein sogenanntes Deep-Q-Network implementieren, das durch ein Q-Learning-Verfahren trainiert wird. Zum Trainieren derartiger Maschinenlernmodule NN sind eine Vielzahl von Reinforcement-Learning-Verfahren verfügbar.

Alternativ oder zusätzlich kann das Maschinenlernmodul NN ein rekurrentes neuronales Netz, ein faltendes neuronales Netz, einen Autoencoder, eine Deep-Learning-Architektur, eine Support-Vector-Machine, ein datengetriebenes Regressionsmodell, einen k-nächste-Nachbar-Klassifikator, ein physikalisches Modell und/oder einen Entscheidungsbaum implementieren.

Zum Generieren von Trainingsdaten für das Maschinenlernmodul NN werden die generierten Regler R1, ..., R4 vom Reglergenerator RGEN zu einem Sequenzgenerator SGEN der Steuerung CTL übermittelt, der daraus für eine Vielzahl von Manipulationszuständen MZ jeweils eine Vielzahl von Reglersequenzen RS generiert. Die Manipulationszustände MZ werden auf allen Manipulationsmodi, hier M1, M2 und M3, zufallsbasiert generiert und dem jeweiligen Manipulationsmodus M1, M2 bzw. M3 zugeordnet. Die generierten Manipulationszustände stellen Startzustände im Zustandsraum dar, von denen ausgehend ein über eine Reglersequenz RS verlaufender Weg zum Manipulationsziel MT gefunden werden soll. Die Reglersequenzen RS werden durch den Sequenzgenerator SGEN ebenfalls zufallsbasiert generiert. Auf diese Weise können durch den Sequenzgenerator SGEN durchaus mehrere Tausend oder Millionen von verschiedenen Kombinationen von Manipulationszuständen MZ und Reglersequenzen RS generiert werden.

Die Manipulationszustände MZ und die zugehörigen Reglersequenzen RS werden vom Sequenzgenerator SGEN zu einem Simulationsmodul SIM übertragen. Zu Letzterem wird auch das Manipulationsziel MT übermittelt. Das Simulationsmodul SIM dient zum Simulieren einer vom jeweiligen Manipulationszustand MZ ausgehenden und durch einen jeweiligen Regler oder durch eine jeweilige Reglersequenz geregelten Manipulation oder Teilmanipulation. Die Anwendung der Regler wird hierbei insbesondere hinsichtlich ihrer physikalischen Manipulationsdynamik und Manipulationskinetik simuliert.

Insbesondere wird durch das Simulationsmodul SIM ermittelt, ob ein vom jeweiligen Manipulationszustand MZ ausgehender und durch eine jeweilige Reglersequenz RS geregelter Weg zum Manipulationsziel MT führt oder nicht. Tatsächlich dürfte die überwiegende Anzahl der zufallsbasierten Reglersequenzen RS suboptimal sein und in einer überwiegenden Anzahl der Fälle scheitern, das heißt letztlich nicht vom jeweiligen Manipulationszustand MZ zum Manipulationsziel MT führen. Um ein Erreichen des Manipulationsziels MT zu quantifizieren, wird durch das Simulationsmodul SIM für eine jeweilige Kombination von Manipulationszustand MZ und Regler bzw. Reglersequenz RS ein Aufwandswert als Simulationsergebnis ermittelt. Der Aufwandswert kann vorzugsweise eine simulierte Zeitdauer und/oder eine Anzahl von simulierten Steuerschritten bis zum Erreichen des Manipulationsziels MT quantifizieren. Für ein Nichterreichen des Manipulationsziels MT kann dem Aufwandswert entsprechend ein singulärer Wert, z.B. -1 oder ein sehr hoher Wert zugewiesen werden. Insbesondere kann zur Ermittlung eines jeweiligen Aufwandswerts eine Belohnungsfunktion ausgewertet werden und/oder eine diskontierte Summe über Einzelaufwandswerte berechnet werden.

Die Manipulationszustände MZ mit jeweils zugeordnetem Manipulationsmodus sowie die Reglersequenzen RS werden dem Maschinenlernmodul NN als Trainingsdaten zugeführt. Unter einem Training sei allgemein eine Optimierung einer Abbildung von Eingabedaten, hier MZ und RS, eines parametrisierten Systemmodells, hier des Maschinenlernmoduls NN, auf Ausgabedaten, hier einer jeweiligen Angabe eines aufwandsoptimierenden Reglers OR, verstanden. Diese Abbildung wird nach vorgegebenen, gelernten und/oder zu lernenden Kriterien während einer Trainingsphase optimiert. Als Kriterien können z.B. bei Steuermodellen ein Erfolg oder eine Performanz einer Steueraktion oder bei Prädiktionsmodellen ein Prädiktionsfehler herangezogen werden. Im vorliegenden Ausführungsbeispiel wird durch das Training angestrebt, die simulativ ermittelten Aufwandswerte zu minimieren. Durch das Training können z.B. eine Vernetzungsstruktur von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme stehen eine Vielzahl von effizienten Optimierungsverfahren zu Verfügung.

Im vorliegenden Ausführungsbeispiel soll das Maschinenlernmodul NN darauf trainiert werden, zu einem vorgegebenen Manipulationszustand MZ einen Regler OR anzugeben, der einen Aufwand zum Erreichen des Manipulationsziels MT, das heißt den betreffenden Aufwandswert minimiert. Zu diesem Zweck wird der vom Maschinelernmodul NN angegebene Regler OR dem Simulationsmodul SIM zugeführt, welches hierzu einen Aufwandswert AW einer vom zugehörigen Manipulationszustand MZ ausgehenden und mit dem angegebenen Regler OR beginnenden Reglersequenz ausgibt. Vorzugsweise wird hierfür eine Reglersequenz mit minimalem Aufwandswert AW ausgewählt. Das Simulationsmodul SIM führt den Aufwandswert AW zum Maschinenlernmodul NN zurück, um dieses - wie in Figur 4 durch einen strichlierten Pfeil angedeutet - darauf zu trainieren, den Aufwandswert AW zu minimieren, das heißt, zu einem vorgegebenen Manipulationszustand MZ jeweils einen Regler OR auszugeben, der einen Aufwand zum Erreichen des Manipulationsziels MT minimiert.

Nach Abschluss eines solchen Trainings implementiert das trainierte Maschinenlernmodul NN eine mittels Reinforcement-Learning optimierte, manipulationsmodusübergreifende Abbildung von einem jeweiligen Manipulationszustand MZ auf einen jeweiligen aufwandsminimierenden Regler OR.

Figur 5 zeigt die trainierte Steuerung CTL beim Steuern einer Manipulation in schematischer Darstellung. Insofern in Figur 5 die gleichen oder korrespondierende Bezugszeichen verwendet werden wie in den vorangegangenen Figuren, werden hierdurch die gleichen oder korrespondierende Entitäten bezeichnet, die vorzugsweise wie oben beschrieben, implementiert oder realisiert sind.

Zum Steuern der Manipulation ist die Steuerung CTL mit dem Roboter R und/oder mit anderen Komponenten des Manipulationssystems MSY gekoppelt. Alternativ kann die Steuerung CTL auch ganz oder teilweise im Roboter R oder im Manipulationssystem MSY implementiert sein.

Zum Steuern der Manipulation wird durch den Roboter R ein aktueller Manipulationszustand AMZ der an der Manipulation beteiligten Komponenten sensorisch erfasst und zur Steuerung CTL übertragen. Der aktuelle Manipulationszustand AMZ und der jeweils zugeordnete Manipulationsmodus werden zum trainierten Maschinenlernmodul NN als Eingabedaten übermittelt. Durch das trainierte Maschinenlernmodul NN wird dann anhand des aktuellen Manipulationszustands AMZ ein aufwandsoptimierender Regler OR ermittelt und zu einer Manipulationssteuerung MCTL der Steuerung CTL übermittelt. Der Manipulationssteuerung MCTL wird außerdem der aktuelle Manipulationszustand AMZ zugeführt.

Die Manipulationssteuerung MCTL implementiert den übermittelten Regler OR und generiert abhängig vom aktuellen Manipulationszustand AMZ Steuerdaten CD zum geregelten Ansteuern des Roboters R oder anderer Komponenten des Manipulationssystems MSY. Die Ansteuerung erfolgt hierbei gemäß dem jeweils implementierten Regler OR. Die generierten Steuerdaten CD werden zum Roboter R übertragen, um diesen abhängig vom jeweiligen aktuellen Manipulationszustand AMZ in einer geschlossenen Regelschleife anzusteuern.

Das Maschinenlernmodul NN kann im vorliegenden Ausführungsbeispiel als den Reglern R1, ..., R4 übergeordneter Regler aufgefasst werden, der den aktuell anzuwendenden Regler, hier OR, selektiert. Auf diese Weise wird ein hierarchisches Reglersystem implementiert.

Die Selektion des jeweiligen aufwandsminimierenden Reglers OR kann in der Regel in Echtzeit erfolgen, da die Anwendung eines trainierten Maschinenlernmoduls üblicherweise erheblich weniger aufwendig ist als sein Training. Insbesondere ist die zur Selektion des aktuellen Reglers OR benötigte Zeitdauer im Wesentlichen unabhängig vom aktuellen Manipulationszustand AMZ und somit unter deterministischen Zeitvorgaben ausführbar. Im Unterschied dazu ist bei vielen bisher bekannten Planern im Allgemeinen vorab nicht bekannt, wann ein Planungsergebnis vorliegen wird.

Die Erfindung erlaubt eine reaktive Steuerung komplexer mehrstufiger Manipulationsprobleme, die unterschiedlichen und insbesondere zeitabhängigen Nebenbedingungen unterworfen sein können. Das Reglersystem erlaubt eine robuste Ausführung der Manipulation, das heißt es können in vielen Fällen auch Hindernisse in optimierter Weise umgangen werden, ohne sich daran festzulaufen. Darüber hinaus genügt oftmals bereits eine Angabe der einzuhaltenden Nebenbedingungen, des Manipulationsziels sowie der Kinetik und Dynamik der an der Manipulation beteiligten Komponenten, um eine effiziente, global optimierte Reglerkaskade zu implementieren.

## Patentansprüche

1. Verfahren zur Manipulation eines Objekts (OB) durch einen Roboter (R), wobei die Manipulation auf ein Manipulationsziel (MT) gerichtet ist und unterschiedliche Manipulationsmodi (M1, M2, M3) umfasst, wobei
a) mehrere manipulationsmodusspezifische Regler (R1,...,R4) jeweils zum Regeln einer auf einen Manipulationsmodus (M1, M2, M3) eingeschränkten Teilmanipulation generiert werden,
b) für eine Vielzahl von Manipulationszuständen (MZ) und eine Vielzahl der generierten Regler (RS) jeweils eine vom jeweiligen Manipulationszustand (MZ) ausgehende und durch den jeweiligen generierten Regler geregelte Teilmanipulation simuliert wird, wobei ein ein Erreichen des Manipulationsziels (MT) quantifizierender Aufwandswert (AW) ermittelt wird,
c) anhand der Vielzahl der Manipulationszustände (MZ), der Vielzahl der generierten Regler (RS) sowie der Aufwandswerte (AW) ein Maschinenlernmodul (NN) darauf trainiert wird, anhand eines Manipulationszustandes einen der generierten Regler zu ermitteln, der einen Aufwandswert optimiert,
d) ein aktueller Manipulationszustand (AMZ) sensorisch erfasst wird,
e) durch das trainierte Maschinenlernmodul (NN) anhand des aktuellen Manipulationszustandes (AMZ) ein aufwandsoptimierender Regler (OR) ermittelt wird, und
f) mittels des aufwandsoptimierenden Reglers (OR) anhand des aktuellen Manipulationszustandes (AMZ) Steuerdaten (CD) zum Ansteuern des Roboters (R) generiert werden.

2. Verfahren nach Anspruch 1, **dadurch gekennzeichnet,**
**dass** ein Zustandsraum der Manipulation eine Konfiguration des Roboters (R), einen Roboterzustand, einen Objektzustand, einen Kontaktzustand zwischen Roboter und Objekt, einen Zeitparameter, eine Zeitableitung und/oder einen Zustand anderer an der Manipulation beteiligter Komponenten umfasst.

3. Verfahren nach Anspruch 2, **dadurch gekennzeichnet,**
**dass** unterschiedliche, bei der Manipulation einzuhaltende Nebenbedingungen (NB) erfasst werden, und
**dass** aus einer durch eine jeweilige Nebenbedingung (NB) bedingten Einschränkung des Zustandsraums ein jeweiliger Manipulationsmodus (M1, M2, M3) abgeleitet wird.

4. Verfahren nach Anspruch 3, **dadurch gekennzeichnet,**
**dass** eine jeweilige Nebenbedingung (NB) eine Fixierung des Objekts (OB), eine Bewegungsbegrenzung einer Achse des Roboters (R), eine Kollisionsvermeidung, eine Geschwindigkeitsbegrenzung, eine Beschleunigungsbegrenzung, eine Kraftbegrenzung und/oder eine Abstandsbegrenzung betrifft.

5. Verfahren nach einem der vorhergehenden Ansprüche, **dadurch gekennzeichnet,**
**dass** ein manipulationsmodusspezifischer Regler (R2, R3) zum Regeln einer auf einen ersten Manipulationsmodus (M1, M2) eingeschränkten, zu einem zweiten Manipulationsmodus (M2, M3) führenden Teilmanipulation generiert wird.

6. Verfahren nach einem der vorhergehenden Ansprüche, **dadurch gekennzeichnet,**
**dass** innerhalb eines Manipulationsmodus (M1, M3) ein Teilmanipulationsziel (TT, MT) selektiert wird, und
**dass** ein manipulationsmodusspezifischer Regler (R1, R4) zum Regeln einer auf diesen Manipulationsmodus (M1, M3) eingeschränkten, zum Teilmanipulationsziel (TT, MT) führenden Teilmanipulation generiert wird.

7. Verfahren nach Anspruch 6, **dadurch gekennzeichnet,**
**dass** das Teilmanipulationsziel (TT) zufallsbasiert selektiert wird.

8. Verfahren nach einem der vorhergehenden Ansprüche, **dadurch gekennzeichnet,**
**dass** die Vielzahl der Manipulationszustände (MZ) zufallsbasiert generiert wird, und/oder
**dass** die Vielzahl der generierten Regler (RS) zufallsbasiert ausgewählt wird.

9. Verfahren nach einem der vorhergehenden Ansprüche, **dadurch gekennzeichnet, dass**
der Aufwandswert (AW) abhängig von einer simulierten Zeitdauer und/oder einer Anzahl von simulierten Steuerschritten bis zum Erreichen des Manipulationsziels (MT) ermittelt wird.

10. Verfahren nach einem der vorhergehenden Ansprüche,
**dadurch gekennzeichnet,**
**dass** für eine Vielzahl von Abfolgen von generierten Reglern (RS) jeweils eine durch die jeweilige Abfolge geregelte Manipulation simuliert wird, wobei ein ein Erreichen des Manipulationsziels (MT) quantifizierender Aufwandswert (AW) ermittelt wird, und
**dass** das Training des Maschinenlernmoduls (NN) anhand dieser ermittelten Aufwandswerte (AW) erfolgt.

11. Verfahren nach einem der vorhergehenden Ansprüche,
**dadurch gekennzeichnet, dass**
das Maschinenlernmodul (NN) ein Verfahren des bestärkenden Lernens, ein Deep-Q-Network, ein künstliches neuronales Netz, ein rekurrentes neuronales Netz, ein faltendes neuronales Netz, einen Autoencoder, eine Deep-Learning-Architektur, eine Support-Vector-Machine, ein datengetriebenes Regressionsmodell, einen k-nächste-Nachbar-Klassifikator, ein physikalisches Modell und/oder einen Entscheidungsbaum implementiert.

12. Manipulationssystem (MSY) mit einem Roboter (R) zur Manipulation eines Objekts (OB), eingerichtet zum Ausführen eines Verfahrens nach einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach einem Anspruch 13.
